Europäisches Patentamt

European Patent Office

Office européen des brevets

(19)

(11) Veröffentlichungsnummer: **0 244 606**
**B1**

(12) # EUROPÄISCHE PATENTSCHRIFT

(45) Veröffentlichungstag der Patentschrift:
**31.10.90**

(51) Int. Cl.⁵: **B27C 1/06**, B23Q 11/00,
B27G 3/00, B27G 21/00

(21) Anmeldenummer: **87103992.1**

(22) Anmeldetag: **18.03.87**

(54) **Dicken- und Abrichthobelmaschine.**

(30) Priorität: **17.04.86 DE 8610494 U**

(43) Veröffentlichungstag der Anmeldung:
**11.11.87 Patentblatt 87/46**

(45) Bekanntmachung des Hinweises auf die Patenterteilung:
**31.10.90 Patentblatt 90/44**

(84) Benannte Vertragsstaaten:
**AT CH DE FR IT LI**

(56) Entgegenhaltungen:
**DE-A- 3 340 579**
**DE-C- 519 663**
**DE-C- 567 182**
**DE-U- 8 602 800**
**FR-A- 840 704**
**FR-A- 934 098**
**FR-A- 2 276 907**
**GB-A- 440 095**
**US-A- 1 394 499**
**US-A- 2 432 190**
**US-A- 2 595 483**
**US-A- 2 762 404**
**US-A- 4 485 859**

(73) Patentinhaber: **Mafell Maschinenfabrik Rudolf Mey GmbH & Co. KG, Postfach 1180, D-7238 Oberndorf a. N.(DE)**

(72) Erfinder: **Bernhard, Jürgen, Dipl.-Ing. (FH), Tiergarten 3, D-7246 Empfingen(DE)**
Erfinder: **Heinzelmann, Werner, Felbenstrasse 3, D-7238 Oberndorf(DE)**

(74) Vertreter: **Patentanwälte Dipl.-Ing. B. Schmid Dr.-Ing. G.A. Birn Dipl.-Ing. H. Quarder, Falbenhennenstrasse 17, D-7000 Stuttgart 1(DE)**

## Beschreibung

Die Erfindung bezieht sich auf eine Dicken- und Abrichthobelmaschine. In der älteren Patentanmeldung gemäß EP-A 231 813 ist eine Dicken- und Abrichthobelmaschine mit den Merkmalen a) bis d) bereits vorgeschlagen worden.

Das Späneleitblech befindet sich beim Dickenhobeln oben auf dem Maschinentisch, wobei es die Hobelwelle übergreift. Die Späne werden in etwa horizontaler Richtung annähernd parallel zur Tischoberfläche herausgeschleudert. Dies führt zu einer halbwegs geordneten Späneabführung. Es läßt sich aber nicht verhindern, daß die Späne über den Arbeitstisch hinausfliegen und anschließend in bekannter Weise eingesammelt werden müssen.

Während also das Späneleitblech beim Dickenhobeln eine Arbeitsstellung einnimmt, in welcher die Hobelwelle abgedeckt ist, muß es die Hobelwelle beim Abrichten wenigstens teilweise freigeben. Bei schmalem Hobelgut reicht es aus, wenn man die Hobelwelle nur um den erforderlichen Betrag freigibt, während der Rest abgedeckt bleibt. Voraussetzung ist allerdings, daß dies die Konstruktion überhaupt zuläßt. Bei der älteren Konstruktion ist dies möglich. Man kann das Späneleitblech parallel zur Hobelwellenachse um einen etwa der Breite des Hobelguts entsprechenden Betrag nach außen, also vom Längsanschlag weg verschieben. Wenn allerdings die gesamte Länge der Hobelwelle benötigt wird, verschiebt man das Späneleitblech ganz nach außen, so daß es – falls man es nicht völlig abnimmt – nur noch in der seitlich des Maschinentisches befindlichen Längsführung gehalten ist.

Bei der älteren Konstruktion wird es als nachteilig angesehen, daß die zwar geordnet herausfliegenden Späne letztendlich doch aufgesammelt werden müssen und sie sich während des Arbeitens überall ablagern können.

Die Aufgabe der Erfindung wird infolgedessen darin gesehen, die Abricht- und Dickenhobelmaschine der älteren Patentanmeldung so weiterzubilden, daß beim Dickenhobeln die Späne geordnet abgeführt werden können, ohne daß hierdurch Nachteile beim Abricht- und beim Dickenhobeln in Kauf genommen werden müssen.

Zur Lösung dieser Aufgabe wird erfindungsgemäß vorgeschlagen, daß die Abricht- und Dickenhobelmaschine gemäß Anspruch 1 ausgebildet ist. Durch die Verwendung einer Absaugdüse kann man nun die aus dem Späneleitblech austretenden Späne gezielt erfassen und über einen mit der Absaugdüse verbundenen bekannten Absaugschlauch so abführen, daß ein freies Umherfliegen verhindert und ein geordnetes Einsammeln möglich ist. Die Späne können dann entsorgt oder, soweit sie hierfür geeignet sind, einer weiteren Verwendung zugeführt werden. Vor dem Abrichthobeln nimmt man die Absaugdüse ab. Dies ist dadurch auf besonders einfache Weise möglich, daß sie mit der Maschine über eine Steck- und Einrastverbindung verbunden ist, die ein rasches Lösen ohne Werkzeuge gestattet. Genauso einfach kann die Absaugdüse vor dem Dickenhobeln wieder montiert werden. In der bereits vorgeschlagenen Art läßt sich auch bei dieser Maschine das Späneleitblech beim Abrichthobeln als Verdeckung für den dabei nicht benötigten Teil der Hobelwelle ausnutzen.

Eine Weiterbildung der Maschine sieht vor, daß am Längsanschlag eine Einsecköffnung und entsprechend an der Absaugdüse ein Einsteckelement ausgebildet ist. Vorzugsweise handelt es sich beim Einsteckelement um einen Zapfen mit insbesondere kreisrundem Querschnitt, so daß man als Einsecköffnung eine leicht herzustellende Bohrung verwenden kann. Die Längsachse des Zapfens erstreckt sich zweckmäßigerweise parallel zur Hobelwelle.

Eine andere Ausgestaltung der Erfindung sieht vor, daß sich an der dem Längsanschlag abgewandten Seite der unteren Wandung der Absaugdüse ein sich in Hobelwellenachsrichtung erstreckender Ansatz befindet, dem eine entsprechende Ausnehmung am Bodenblech der C-förmigen Führung zugeordnet ist. Beim Montieren der Absaugdüse bringt man zunächst das Einsteckelement in die Einstecköffnung, wobei die Längsachse des Düseneintrittsschlitzes etwas geneigt zur Tischoberfläche verläuft. Anschließend senkt man das "hochstehende" Düsenende mit dem seitlich abstehenden Ansatz nach unten, wodurch dann letzterer in die nach oben offene Ausnehmung der C-förmigen Führung eingreift. Man erreicht auf diese Weise eine Verschiebesicherung in Längsrichtung des Tisches einerseits und in Längsrichtung der Hobelwelle andererseits. Das Hochheben oder Hochschwenken der Einsteckdüse wird von dem in einer Arbeitsstellung befindlichen Späneleitblech verhindert. Es wird nach der Montage der Absaugdüse gegen den Längsanschlag hin verschoben, wodurch es sich im Schwenk- oder Anhebebewegungsbereich der Absaugdüse befindet.

Eine weitere Ausbildung der Maschine sieht vor, daß das Späneleitblech mit einem oberen Rand einen oberen Randbereich der Absaugdüse untergreift. Das Unter- bzw. Übergreifen kann mit sehr geringem Abstand erfolgen, so daß zugleich auch eine ausreichende "Abdichtung" erreicht wird. Ein besonderes Dichtelement zwischen beiden Teilen ist nicht erforderlich, weil die schnell bewegten Späne einerseits aus dem Späneleitblech herausgeschleudert und herausgeblasen werden und sie andererseits vom Saugstrom in der Absaugdüse erfaßt werden.

Des weiteren ist es auch sehr vorteilhaft, daß die Austrittsöffnung der Absaugdüse mit einem Schlauchverbindungsstutzen versehen oder als solcher ausgebildet ist. Man kann die Späne von der Absaugdüse über den Verbindungsschlauch in ein geeignetes Behältnis leiten, dem vorzugsweise die Saugeinrichtung unmittelbar zugeordnet ist.

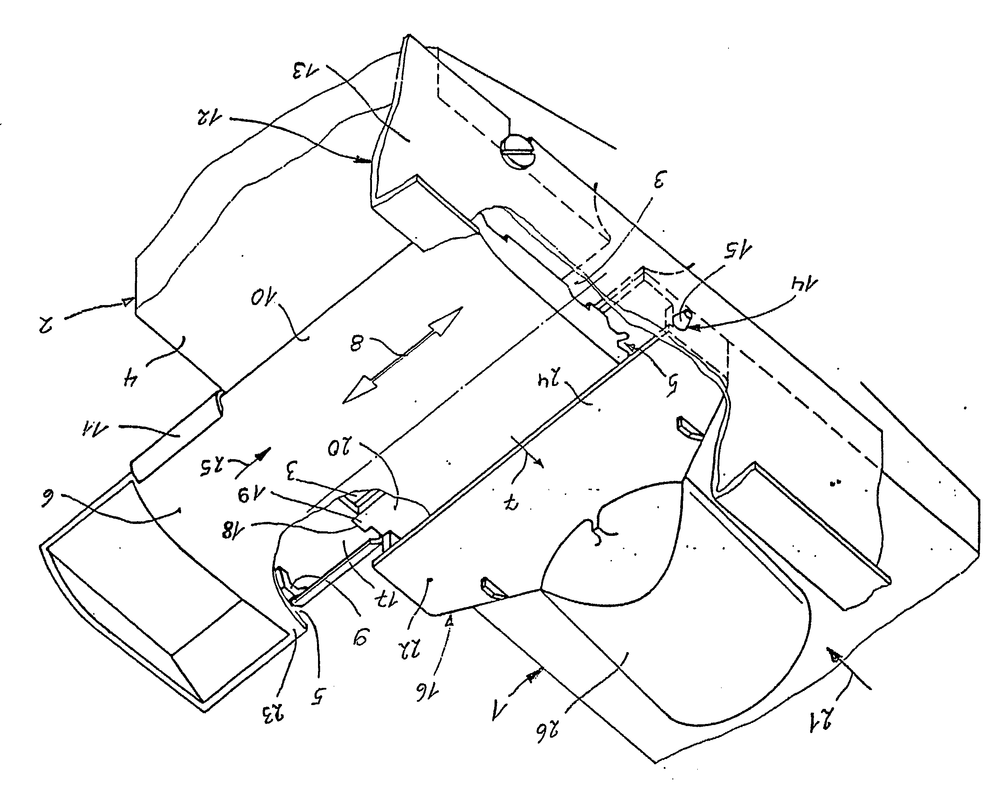

Die Erfindung wird nachstehend anhand der Zeichnung näher erläutert. Die Zeichnung zeigt ein Ausführungsbeispiel der Erfindung in einer teilweise aufgebrochenen Schrägbilddarstellung.

Die Dicken- und Abrichthobelmaschine besitzt einen zweiteiligen oberen Maschinentisch, der aus dem Auflagetisch 1 und dem Abnahmetisch 2 besteht. Durch einen zwischen beiden Tischen gelegenen Schlitz 3 ragt die Hobelwelle nach oben, wobei der Flugkreis der Hobelwellen-Messerschneiden beim Hobeln tangential zur Auflagefläche 4 des Abnahmetisches 2 verläuft.

Ein unterer oder innerer Maschinentisch od. dgl., der in der Zeichnung nicht dargestellt, aber als solcher bekannt ist, dient zum Abstützen des Hobelguts beim Dickenhobeln. Dabei befindet sich dann die Hobelwelle über der Oberseite des Werkstücks und hobelt diese eben. Zugleich wird das Hobelgut auf Dicke gehobelt. Die erzeugten Späne treten über den Späneauswurfschlitz 5 eines Späneleitblechs 6 in Pfeilrichtung 7 aus. Das Späneleitblech 6 ist in Richtung des Doppelpfeils 8 parallel zur Hobelwelle verschiebbar an der Maschine gelagert und zugleich als flache Verdeckung für die Hobelwelle ausgebildet. In der Zeichnung nimmt das Späneleitblech eine geringfügig nach rechts oben verschobene Stellung ein. Der Späneauswurfschlitz 5 kann durch das gewölbte obere Blech des haubenförmigen Späneleitblechs und ein an der Austrittseite gegebenenfalls vorgesehenes zusätzliches stegartiges Blech 9 gebildet werden oder aber lediglich durch das obere Blech und die Auflagefläche 4 des Abnahmetisches 2. Beim Ausführungsbeispiel findet ein stegartiges Blech 9 Anwendung, dessen Querschnitt gemäß der Zeichnung trapezförmig ist. Es bildet zugleich einen Teil einer Längsführung, deren anderer Teil durch den rückwärtigen Längsbereich 10 des Späneleitblechs 6 gebildet ist. Eine maschinenseitige Längsführung 11 für das Späneleitblech 6 ist seitlich des Maschinentisches angebracht und hat eine im Querschnitt etwas C-förmige Gestalt, wobei das C gewissermaßen auf dem Rücken liegt. Die Längsführung 11 ist in nicht näher gezeigter Weise seitlich am Maschinentisch befestigt.

In den Zwischenraum zwischen dem stegartigen Blech 9 und der rückwärtigen Hinterkante 10 treten die von unten kommenden, durch die Hobelwelle hochgeschleuderten Späne ein, und sie werden dann an der gewölbten Leitfläche entlanggeblasen, bis sie schließlich über den Späneauswurfschlitz 5 austreten. Der Transport rührt nicht allein aus der kinetischen Energie, sondern auch vom Luftstrom her, den die Hobelwelle erzeugt. Gegenüberliegend der maschinenseitigen Längsführung 11 befindet sich ein beim Ausführungsbeispiel abnehmbarer Längsanschlag 12 für das abzurichtende Hobelgut. Seine senkrecht zur Auflagefläche 4 verlaufende Wand 13 besitzt an der Zuführseite nahe des Schlitzes 3 eine Einsecköffnung 14 für ein Einsteckelement 15 einer Absaugdüse 16. Als Einsteckelement verwendet man zweckmäßigerweise einen Bolzen, den man entweder an seinem freien Ende konisch zulaufen lassen oder der überhaupt eine kegelstumpfförmige Gestalt haben kann.

Die Oberfläche des ebenen Bodenblechs 17 der Längsführung 11 verläuft vorzugsweise bündig mit der Auflagefläche 4 des Abnahmetischs 2. Letzterer ist in der Regel nicht höhenverstellbar im Gegensatz zum Auflagetisch 1, der zur Festlegung der Spantiefe in einem Bereich von ca. 2 bis 4 mm senkrecht zur Auflagefläche 4 höhenverstellbar ausgebildet ist. An seinem der Hobelwelle zugekehrten Ende besitzt die Längsführung 11 eine Ausnehmung 18, die beim Ausführungsbeispiel eine rechteckige Form hat. In diese ist von oben her, also etwa senkrecht zur Auflagefläche 4, ein in Richtung der Hobelwellenachse seitlich abstehender Ansatz 19 der Absaugdüse 16 einsteckbar. Er hat vorzugsweise die gleiche Form, ist aber um das notwendige Spiel kleiner. Der Ansatz 19 ist einstückig an die untere Wandung 20 der Absaugdüse 16 angeformt. Je nach Höheneinstellung des Aufnahmetisches 1 verläuft die Oberfläche der unteren Wandung 20 bündig oder etwa bündig mit der Oberfläche des Bodenblechs 17 der Längsführung 11. Außerdem überragt die untere Wandung 20 die obere Wandung 22 der Absaugdüse 16 in Vorschubrichtung 21 des Werkstücks. Die untere Wandung schließt etwa bündig mit dem Schlitz 3 des Maschinentisches ab.

Der rückwärts gerichtete obere Rand 23 des Späneleitblechs 6 untergreift den in Gegenrichtung weisenden oberen Randbereich 24 der Absaugdüse 16 bzw. deren obere Wandung 22 mit nicht zu großem Spiel. In der Arbeitsstellung übergreift das stegartige Blech 9 des Späneleitblechs die untere Wandung 20 der Absaugdüse 16. Damit ist einerseits ein strömungsmäßig weitgehend geschlossener Anschluß des Späneleitblechs 6 an die Absaugdüse 16 und andererseits ein Niederhalten der letzteren während des Dickenhobelns gewährleistet.

Bei der Montage der Absaugdüse 16 steckt man zunächst das Element 15 in die Öffnung 14 und senkt dann anschließend das gegenüberliegende Ende ab, bis der seitliche Ansatz 19 in die Ausnehmung 18 der Längsführung 11 eingetreten ist. Hernach verschiebt man das beim Einsetzen der Absaugdüse 16 zunächst in seiner nach außen verschobenen Endstellung befindliche Späneleitblech 6 im Sinne des Pfeils 25 bis sein inneres Ende etwa am Längsanschlag 12 angekommen ist.

Die Absaugdüse verjüngt sich an ihrem vom Schlitz 3 abgewandten Ende und geht schließlich in einen Schlauch-Verbindungsstutzen 26 über.

## Patentansprüche

1. Dicken- und Abrichthobelmaschine, bestehend aus

a) einem Auflagetisch (1) und einem Abnahmetisch (2), einer dazwischen angeordneten Hobelwelle und einem Längsanschlag (12), wobei

b) die Maschine ein die Hobelwelle übergreifendes Späneleitblech (6) besitzt, das einen Späneauswurfschlitz (5) aufweist, und das in einer seitlich an der Maschine angebrachten C-förmigen Führung (11) parallel zur Hobelwellenachse und in Richtung auf den Längsanschlag (12) verschiebbar ist, wobei

c) das Späneleitblech zur Führung eine gerade Hinterkante (10) und an seiner Vorderkante ein dazu parallel verlaufendes stegartiges Blech (9) besitzt, und wobei

d) das stegartige Blech (9) an der der Hinterkante (10) abgewandten Seite des Späneleitblechs (6) befestigt ist und bei Anlage des Späneleitblechs (6) am Längsanschlag (12) im Eingriff mit der C-förmigen Führung (11) bleibt, und wobei

e) eine Absaugdüse (16) vorgesehen ist, die sich über die ganze Länge des Späneauswurfschlitzes (5) erstreckt, und

f) eine Steck- und Einrastverbindung ausgebildet ist, mit der die Absaugdüse (16) mit dem Längsanschlag (12) und einem Bodenblech (17) der C-förmigen Führung (11) verbunden werden kann, und wobei

g) das stegartige Blech des Späneleitblechs (6) in jeder Verschiebearbeitsstellung einen Teilbereich einer unteren Wandung (20) der Absaugdüse (16) als Sicherungselement übergreift.

2. Maschine nach Anspruch 1, dadurch gekennzeichnet, daß am Längsanschlag (12) eine Einsecköffnung (14) und entsprechend an der Absaugdüse (16) ein Einsteckelement (15) ausgebildet ist.

3. Maschine nach Anspruch 2, dadurch gekennzeichnet, daß sich an der dem Längsanschlag (12) abgewandten Seite der unteren Wandung (20) der Absaugdüse (16) ein sich in Hobelwellenachsrichtung erstreckender Ansatz (19) befindet, dem eine entsprechende Ausnehmung (18) am Bodenblech (17) der C-förmigen Führung zugeordnet ist.

4. Maschine nach Anspruch 1, dadurch gekennzeichnet, daß das Späneleitblech (6) mit einem oberen Rand (23) einen oberen Randbereich (24) der Absaugdüse (16) untergreift.

5. Maschine nach Anspruch 1, dadurch gekennzeichnet, daß die Austrittsöffnung der Absaugdüse (16) mit einem Schlauchverbindungsstutzen (26) versehen oder als solcher ausgebildet ist.

## Claims

1. Thicknessing and surface-planing machine comprising

a) a supporting table (1) and a removal table (2), a planing-shaft positioned therebetween and a longitudinal feed stop (12),

b) the machine having a shaving guide plate (6) which engages over the planing shaft and has a shaving discharge slot (5), and which can be moved in the direction of the longitudinal feed stop (12) in a crescent-shaped guide (11) which is fixed to the side of the machine parallel to the planing shaft axis, and

c) the shaving guide plate having a straight trailing edge (10) and on its leading edge a bridge-like plate (9) extending parallel thereto for guiding, and

d) the bridge-like plate (9) being fixed to the side of the shaving guide plate (6) turned away from the trailing edge (10) and which remains in engagement with the crescent-shaped guide (11) when the shaving guide plate (6) abuts against the longitudinal feed stop (12), and

e) a suction nozzle (16) being provided which extends over the entire length of the shaving discharge slot (5), and

f) a plug and lock connection being formed by means of which the suction nozzle (16) can be connected to the longitudinal feed stop (12) and a bottom plate (17) of the crescent-shaped guide (11), and

g) the bridge-like plate of the shaving guide plate (6) engaging over a partial area of a lower wall (20) of the suction nozzle (16) as a securing element in every displacement working position.

2. Machine according to claim 1, characterized in that a plug-in aperture (14) at the longitudinal feed stop (12) is formed and correspondingly a plug-in element (15) is formed at the suction nozzle (16).

3. Machine according to claim 2, characterized in that there is an attachment (19) which extends in the direction of the planing shaft axis on the side of the lower wall (20) of the suction nozzle (16) turned away from the longitudinal feed stop (12) and with which a corresponding recess (18) at the bottom plate (17) of the crescent-shaped guide is associated.

4. Machine according to claim 1, characterized in that the shaving guide plate (6) engages under an upper edge area (24) of the suction nozzle (16) with an upper edge (23).

5. Machine according to claim 1, characterized in that the outlet of the suction nozzle (16) is provided with a hose coupling piece (26) or is formed as such.

## Revendications

1. Raboteuse à tirer d'épaisseur et à dégauchir, constituée de :

a) un plateau porte-pièce (1) et un plateau de réception (2), un arbre de rabotage disposé entre les deux plateaux, et une butée longitudinale (12), dans laquelle

b) la raboteuse possède une tôle de guidage des copeaux (6) qui recouvre l'arbre de rabotage, qui présente une fente d'évacuation des copeaux (5), et qui peut être déplacée, parallèlement à l'axe de l'arbre de rabotage et en direction de la butée longitudinale (12), dans une coulisse (11) en forme de C montée latéralement sur la raboteuse,

c) la tôle de guidage des copeaux possédant, pour le guidage, une arête arrière rectiligne (10), et, sur son arête avant, une tôle (9) s'étendant parallèlement à cette arête à la manière d'un rebord, et

d) la tôle du genre rebord (9) étant fixée sur le côté de la tôle de guidage des copeaux (6) qui est opposé à l'arête arrière (10), et restant engagée avec la coulisse en forme de C (11) lorsque la tôle de guidage des copeaux (6) s'appuie contre la butée longitudinale (12), et dans laquelle

e) il est prévu une buse d'aspiration (16) qui s'étend sur toute la longueur de la fente d'évacuation des copeaux (5), et

f) il est prévu un assemblage par emboîtement et enclenchement, au moyen duquel la buse d'aspiration (16) peut être assemblée à la butée longitudinale (12) et à une tôle de fond (17) de la coulisse en forme de C (11), et

g) la tôle du genre rebord de la tôle de guidage des copeaux (6), dans chaque position de travail obtenue après déplacement, recouvrant une région partielle d'une paroi inférieure (20) de la buse d'aspiration (16), comme dispositif de blocage en position.

2. Raboteuse selon la revendication 1, caractérisée en ce qu'une ouverture d'enclenchement (14) est réalisée sur la butée longitudinale (12), et un élément d'enclenchement (15) est réalisé d'une manière correspondante sur la buse d'aspiration (16).

3. Raboteuse selon la revendication 2, caractérisée en ce qu'un appendice (19), s'étendant dans le sens axial de l'arbre de rabotage, et auquel est associé un évidement correspondant (18) sur la tôle de fond (17) de la coulisse en forme de C, se trouve sur le côté de la paroi inférieure (20) de la buse d'aspiration (16) qui est opposé à la butée longitudinale (12).

4. Raboteuse selon la revendication 1, caraotérisée en ce que la tôle de guidage des copeaux (6) s'engage par un bord supérieur (23) sous une région de bord supérieure (24) de la buse d'aspiration (16).

5. Raboteuse selon la revendication 1, caractérisée en ce que l'ouverture de sortie de la buse d'aspiration (16) est munie d'un raccord de flexible (26), ou réalisée sous forme de raccord de flexible.